# EUROPÄISCHE PATENTSCHRIFT

(11) **EP 1 751 630 B1**
(45) Veröffentlichungstag und Bekanntmachung des Hinweises auf die Patenterteilung: **14.11.2007**
(21) Anmeldenummer: 05701650.3
(22) Anmeldetag: 09.02.2005
(51) Int. Cl.: G05B 19/042

(54) **MIKROCONTROLLERSYSTEM UND BETRIEBSVERFAHREN DAFÜR**
MICROCONTROLLER SYSTEM AND OPERATING METHOD THEREFOR
SYSTEME DE MICROCONTROLEUR ET PROCEDE POUR FAIRE FONCTIONNER CE DERNIER

(30) Priorität: 10.04.2004 DE 102004017719
(43) Veröffentlichungstag der Anmeldung: 14.02.2007
(73) Patentinhaber: ROBERT BOSCH GMBH, 70442 Stuttgart (DE)
(72) Erfinder: KOERNER, Gotthilf, 71287 Weissach (DE); FEHRENBACHER, Berthold, 71706 Markgroeningen (DE)
(86) Internationale Anmeldenummer: PCT/EP2005/050567
(87) Internationale Veröffentlichungsnummer: WO 2005/098557

(56) Entgegenhaltungen:
- DE-A1- 10 018 859
- DE-A1- 10 030 991

## Beschreibung

### Stand der Technik

Die vorliegende Erfindung betrifft ein Mikrocontrollersystem mit einem Mikrocontroller, der eingerichtet ist, bei jedem Start des Systems sowie unter vorgegebenen Ausnahmebedingungen während des Betriebes ein Betriebsvorbereitungsprogramm auszuführen und nach Ausführung des Betriebsvorbereitungsprogramms zu einem Normalbetriebsprogramm überzugehen und unter der Steuerung durch das Normalbetriebsprogramm ein Normalbetriebs-Anzeigesignal auszugeben, einer durch den Mikrocontroller steuerbaren Vorrichtung und einer Überwachungsvorrichtung zum Überwachen, ob der Mikrocontroller das Normalbetriebsprogramm ausführt, anhand des Nonnalbetnebs-Anzeigesignals.

Die Druckschrift DE 100 30 991 A1 zeigt ein Mikrocontrollersystem, das Teil eines Sicherheitssystems eines Kraftfahrzeuges ist und im wesentlichen die Merkmale des Oberbegriffs des Anspruchs 1 aufweist.

Mikrocontrollersysteme dieser Art werden zur Steuerung diverser sicherheitsrelevanter Systeme in Kraftfahrzeugen wie etwa Antiblockiersystemen, Lageregelungssystemen, hydraulischen Bremssystemen etc. eingesetzt, wobei die Überwachungsvorrichtung dazu dient, die gesteuerte Vorrichtung wie etwa eine Fahrzeugbremse, Lageregelungsaktuatoren oder dergleichen in einen gesicherten Zustand überzuführen, wenn ein Nichtvorliegen des Normalbetriebs-Anzeigesignals darauf hindeutet, dass die Ausführung des Normalbetriebsprogramm durch den Mikrocontroller gestört und folglich die Betriebssicherheit des gesamten Systems nicht gewährleistet ist.

Ein Nichtvorliegen des Normalbetriebs-Anzeigesignals kann darauf zurückzuführen sein, dass in Folge eines Programmfehlers der Mikrocontroller in einen undefinierten Zustand geraten, das heißt, abgestürzt ist, oder dass das Normalbetriebsprogramm das Vorliegen von Ausnahmebedingungen registriert hat und zu deren Beseitigung eine vollständige oder teilweise Wiederholung des Betriebsvorbereitungsprogramms veranlasst hat.

Damit eine solche Wiederholung durchgeführt und anschließend der Normalbetrieb automatisch wieder aufgenommen werden kann, ist der Übergang in den gesicherten Zustand bei Nichtvorliegen des Normalbetriebs-Anzeigesignals zunächst noch nicht definitiv, so dass die gesteuerte Vorrichtung, wenn das Normalbetriebs-Anzeigesignal innerhalb einer vorgegebenen Zeitspanne wiederkehrt, aus dem gesicherten in ihren voll funktionsfähigen Betriebszustand zurückkehren kann. Erst wenn das Normalbetriebs-Anzeigesignal länger als über die vorgegebene Zeitspanne hinweg ausbleibt, erfolgt eine Verriegelung der gesteuerten Vorrichtung in dem gesicherten Zustand, so dass eine Rückkehr in den voll funktionsfähigen Betriebszustand ohne äußeren Eingriff ausgeschlossen ist.

Wenn, beispielsweise aufgrund eines Fehlers in den Programmen des Mikrocontrollers, die Ausführung des Normalbetriebsprogramms ständig zum Auftreten von Ausnahmebedingungen führt, so gerät ein solches herkömmliches Mikrocontrollersystem in eine Endlosschleife, in der sich Ausnahmebedingung, Wiederholung des Betriebsvorbereitungsprogamms und Ausführung des Normalbetriebsprogramms bis zum erneuten Auftreten der Ausnahmebedingung abwechseln.

### Vorteile der Erfindung

Durch die vorliegende Erfindung werden ein Mikrocontrollersystem bzw. ein Betriebsverfahren für ein Mikrocontrollersystem geschaffen, die es erlauben, das Auftreten von Endlosschleifen der oben beschriebenen Art zu unterdrücken. Dies wird dadurch erreicht, dass die Überwachungseinrichtung ein Register aufweist, das jeweils bei Eintritt der Ausnahmebedingungen inkrementiert wird, und dass die Überwachungseinrichtung eingerichtet ist, die gesteuerte Vorrichtung in dem gesicherten Zustand zu verriegeln, wenn der Inhalt des Registers einen vorgegebenen Wert erreicht. So wird die Zahl der möglichen Eintritte von Ausnahmebedingungen bis zur endgültigen Verriegelung auf einen festen Wert begrenzt. Anpassungen an den vom Mikrocontroller auszuführenden Programmen sind hierfür nicht erforderlich, so dass die Erfindung ohne aufwendige Anpassungen an Mikrocontrollersystemen für beliebige Steuerungsaufgaben anwendbar ist.

Das jeweils beim Eintritt von Ausnahmebedingungen durchzuführende Betriebsvorbereitungsprogramm kann für die betreffenden Ausnahmebedingungen spezifisch sein, vorzugsweise ist es jedoch in dem beim Start ausgeführten Betriebsvorbereitungsprogramm enthalten, das heißt, es umfasst wenigstens eine Teilmenge der Programmanweisungesn des beim Start ausgeführten Betriebsvorbereitungsprogramms.

Vorzugsweise ist es der Mikrocontroller selbst, der eingerichtet ist, den Eintritt der Ausnahmebedingungen zu erkennen und ein Ausnahmebedingungs-Anzeigesignal an die Überwachungseinrichtung zu liefern. So können als Ausnahmebedingungen auch interne Bedingungen des Mikrocontrollers benutzt werden, die einer vom Mikrocontroller getrennt implementierten Ausnahmebedingungs-Erkennungseinrichtung nicht zur Verfügung stünden.

Zweckmäßigerweise hat der Mikrocontroller Lesezugriff auf das Register und ist eingerichtet, einen Vergleich der Inhalte des Registers vor und nach Ausgabe eines Ausnahmebedingungs-Anzeigesignals vorzunehmen. Dies erlaubt es dem Mikrocontroller, das ordnungsgemäße Funktionieren der Überwachungseinheit zu überprüfen und ggf, eine Fehlerwamung zu erzeugen.

Dieser Vergleich der Inhalte des Registers vor und nach Ausgabe eines Ausnahmebedingungs-Anzeigesignals findet vorzugsweise unter der Kontrolle eines Betriebsvorbereitungsprogramms statt. Dabei kann es sich bei dem den Vergleich steuernden Programmteil insbesondere um einen Programmteil handeln, der nur beim Start des Systems, nicht aber in Folge einer Ausnahmebedingung, ausgeführt wird.

Für die Zeitspanne, nach der bei Nichtvorliegen des Normalbetriebs-Anzeigesignals der gesicherte Zustand verriegelt wird, können zwei verschiedene Längen vorgegeben sein, wobei die Überwachungseinrichtung eingerichtet ist, die größere Länge der Zeitspanne bei Vorliegen der Ausnahmebedingungen und die kürzere bei deren Nichtvorliegen zu wählen. Dadurch ist es möglich, bei einem Ausbleiben des Normalbetriebs-Anzeigesig nals aus unbekanntem Grund, das heißt bei einem Ausbleiben, das nicht auf die im Voraus bekannten und bei der Entwicklung des Betriebsprogramms des Mikrocontrollers berücksichtigten Ausnahmebedingungen zurückgeht, den gesicherten Zustand schnell zu verriegeln und so ein hohes Maß an Sicherheit zu erzielen, während die Zeitspanne bis zum Verriegeln bei Vorliegen der Ausnahmebedingungen großzügig bemessen werden kann, so dass das Betriebsvorbereitungsprogramm in dieser Zeitspanne mit Sicherheit abgeschlossen werden kann.

Das Register hat vorzugsweise bei jedem Start des Systems den gleichen Inhalt, so dass bei jedem Start des Systems die gleiche Zahl von Ausnahmebedingungen toleriert wird, bevor der gesicherte Zustand verriegelt wird.

Weitere Merkmale der Erfindung ergeben sich aus der nachfolgenden Beschreibung von Ausführungsbeispielen unter Bezugnahme auf die beigefügte Figur.

### Figur

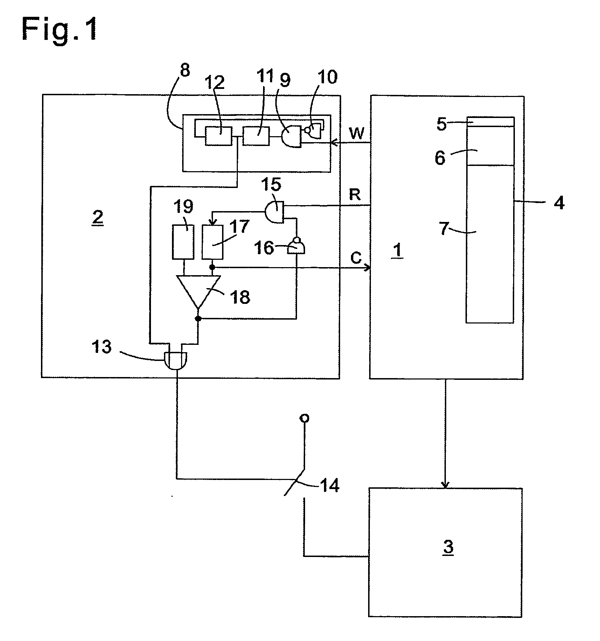

Figur 1 zeigt ein Blockdiagramm eines erfindungsgemäßen Mikrocontrollersystems.

### Beschreibung der Ausführungsbeispiele

Das in Figur 1 gezeigte Mikrocontrollersystem ist im -Wesentlichen aufgebaut aus drei Komponenten, einem Mikrocontrollerbaustein 1, einem ASIC 2 und einer von dem Mikrocontrollerbaustein 1 gesteuerten Vorrichtung 3, zum Beispiel Ventilen eines Antiblockiersystems für ein Kraftfahrzeug.

Die Struktur des Mikrocontrollerbausteins 1 ist an sich bekannt und braucht hier nicht genauer erläutert zu werden. Ein Programmspeicher 4- des Mikrocontrollers enthält in einem Abschnitt 7 hier als Normalbetriebsprogramm bezeichnete Anweisungen, die im Dauerbetrieb ausgeführt werden, sowie Abschnitte 5 und 6, die jeweils als Betriebsvorbereitungsprogramm bezeichnete Anweisungen enthalten, die zur Vorbereitung des Dauerbetriebes ausgeführt werden müssen, während des störungsfreien Dauerbetriebes aber nicht mehr wiederholt werden. Wenn das System gestartet wird, etwa durch Zünden des Motors eines Kraftfahrzeuges, in dem es eingebaut ist, führt der Mikrocontroller die Anweisungen der Abschnitte 5 und 6 aus, im Falle einer - später noch genauer zu erläuternden - Rücksetzung nur die des Abschnittes 6.

Eine der vom Mikrocontroller im störungsfreien Dauerbetrieb erledigten Aufgaben neben der Steuerung der Vorrichtung 3 ist die regelmäßig periodische Ausgabe eines Totmannimpulses an einem Ausgang W. Der Totmannimpuls wird von einer Watchdog-Schaltung 8 des ASIC 2 empfangen. Eine rein exemplarische schematische Struktur zur Erläuterung der Funktionsweise der Watchdog-Schaltung 8 ist in der Figur 1 eingezeichnet. Der Eingang der Watchdog-Schaltung 8 für das Totmannsignal ist ein Eingang eines Und-Gatters 9, an dessen zweitem Eingang nach dem Start des Systems durch ein Negationsgatter 10 ein Hochpegelsignal anliegt, so dass der Totmannimpuls das Und-Gatter 9 passiert. Mit dem Ausgang des Und-Gatters 9 ist ein Rücksetzeingang eines Monoflops oder Zählers 11 verbunden, der ausgelöst durch das Rücksetzsignal von einem festen Anfangswert aus zu zählen beginnt. Wenn der Zähler 11 einen vorgegebenen Endwert erreicht, geht sein Ausgang von logisch niedrigem auf hohen Pegel über, doch ist die Zeit, die der Zähler 11 hierfür benötigt, länger als die Periode des Totmannsignals vom Mikrocontroller 1, so dass unter normalen Betriebsbedingungen der Zähler 11 vor Erreichen des Endwertes zurückgesetzt wird und sein Ausgang auf niedrigem Pegel bleibt.

Wenn jedoch ein Totmannimpuls ausbleibt und der Ausgang des Zählers 11 auf hohen Pegel wechselt, wird dadurch ein zweiter Zähler 12 ausgelöst. Außerdem betätigt das Ausgangssignal des Zählers 11 über ein Oder-Gatter 13 einen Schalter 14, der die Vorrichtung 3 von einer Versorgungsspannung V_{cc} abschneidet oder auf andere Weise die Funktion der Vorrichtung 3 blockiert. Das heißt, die Ventile des Antiblockiersystems können keine vom Mikrocontroller 1 gesendeten Befehle zum Öffnen mehr empfangen und bleiben geschlossen. Die Funktion des Antiblockiersystems ist somit gesperrt, und die Bremsen des Fahrzeuges sind ausschließlich durch die Betätigung eines Bremspedals gesteuert. So ist ausgeschlossen, dass, falls das Ausbleiben des Totmannimpulses auf einen Fehler des Betriebsprogramms des Mikrocontrollers zurückgeht, die Ventile fehlgesteuert werden und die Wirkung der Bremsen zur Unzeit unterbinden. Die Watchdog-Schaltung 8 stellt also durch Öffnen des Schalters 14 einen abgesicherten Zustand des Antiblockiersystems her, in welchem eine Gefährdung des Fahrzeuges durch eine Fehlfunktion des Antiblockiersystems ausgeschlossen ist.

Wenn ein neuer Totmannimpuls vom Mikrocontroller 1 eintrifft, bevor der zweite Zähler 12 seinen Endwert erreicht hat, so durchläuft dieser Impuls wie oben beschrieben das Und-Gatter 9 und setzt den Zähler 11 zurück. Dessen Ausgang kehrt auf logisch niedrigen Pegel zurück, der Zähler 12 wird dadurch zurückgesetzt, und der Schalter 14 schließt wieder. Dadurch wird die Vorrichtung 3 wieder der Kontrolle des Mikrocontrollerbausteins 1 unterstellt

Wenn jedoch kein weiterer Totmannimpuls eintrifft, bevor der Zähler 12 seinen Endwert erreicht, geht dessen mit dem Negationsgatter 10 verbundener Ausgang bei Erreichen seines Endwertes von niedrigem auf hohen Pegel über, das Ausgangssignal des Negationsgatters 10 geht auf niedrigen Pegel, und Totmannimpulse vom Mikrocontroller 1 werden vom Und-Gatter 9 nicht mehr durchgelassen. Das System ist nun im abgesicherten Zustand verriegelt

Der Mikrocontrollerbaustein 1 hat einen Rücksetz-Ausgang R, über dem er in der Lage ist, diverse nicht dargestellte Peripheriebausteine in einen definierten Ausgangszustand zu versetzen. Der Zustand der Watchdog-Schaltung 8 ist durch ein am Ausgang R ausgegebenes Rücksetzsignal nicht beeinflussbar. An diesen Rücksetz-Ausgang ist ein Eingang eines zweiten Und-Gatters 15 angeschlossen, dessen zweiter Eingang nach dem Start des Systems von einem Negationsgatter 16 auf logisch hohem Niveau gehalten wird, so dass der Rücksetz-Impuls das Und-Gatter 15 durchläuft und einen an dessen Ausgang angeschlossenen Zähler 17 inkrementiert. Bei dem Zähler 17 handelt es sich um einen flüchtigen Halbleiterspeicher, dessen Inhalt nach Start des Systems jeweils Null ist.

Der Ausgang des Zählers 17 ist mit einem Eingang C des Mikrocontrollerbausteines 1 und einem Eingang eines Komparators 18 verbunden, an dessen zweitem Eingang ein fester Zahlenwert von einem nicht flüchtigen Register 19 anliegt So lange der Inhalt des Zählers 17 kleiner ist als der Ausgabewert des Registers 19, liefert der Komparator 18 einen logisch niedrigen Ausgangspegel an das Oder-Gatter 13. Wenn jedoch der Inhalt des Zählers 17 den Wert des Registers 19 erreicht, geht der Ausgang des Komparators 18 auf logisch hohen Pegel, wodurch der Schalter 14 öffnet und den abgesicherten Zustand herstellt. Der vom Komparator 18 ausgelöste abgesicherte Zustand ist ein verriegelter Zustand; er ist unabhängig davon, ob Totmannimpulse am Ausgang W vorhanden sind oder nicht Er ist auch nicht durch die Ausgabe eines Rücksetz-Signals vom Mikrocontrollerbaustein 1 aufhebbar. Er kann nur aufgehoben werden durch Ausschalten des gesamten Systems, so dass der Zähler 17 seinen Inhalt verliert.

Wenn das System eingeschaltet wird, beginnt der Mikrocontrollerbaustein 1 damit, die im Abschnitt 5 gespeicherten Programmanweisungen des Betriebsvorbereitungsprogramms abzuarbeiten. Unter diesen Anweisungen befindet sich eine zum Ausgeben eines Rücksetz-Impulses auf den Ausgang R und zum anschließenden Lesen des Inhaltes des Zählers 17 über den Eingang C. Wenn das System ordnungsgemäß funktioniert, muss der gelesene Wert 1 sein, da der Inhalt des Zählers 17 beim Systemstart 0 ist und der Zähler 17 einmal inkrementiert wurde. Wenn der gelesene Wert von 1 verschieden ist, verzweigt das Betriebsprogramm zu einer geeigneten Fehlerabfangroutine, die die Ausgabe einer Fehlermeldung an den Fahrer und eventuell die Sperrung von bestimmten Funktionen des Mikrocontrollers 1 beinhaltet, falls deren Betriebssicherheit nicht mehr gewährleistet werden kann. Wenn der gelesene Wert 1 ist, wird das Betriebsvorbereitungsprogramm weiter abgearbeitet, einschließlich der Anweisungen im Abschnitt 6, und der Mikrocontroller geht schließlich zur Ausführung des Normalbetriebsprogramms anhand der Anweisungen des Abschnitts 7 über, in dem die Totmannimpulse regelmäßig erzeugt werden. Dabei ist die Zähldauer des zweiten Zählers 12 länger gewählt als die zur Ausführung des Betriebsvorbereitungsprogramms erforderliche Zeit, so dass die Tatsache, dass während der Ausführung des Betriebsvorbereitungsprogramms keine Totmannimpulse erzeugt werden, noch nicht zur Verriegelung des abgesicherten Zustandes führt.

Wenn der Mikrocontroller während der Ausführung des Normalbetriebsprogramnms Ausnahmebedingungen feststellt, das heißt vorgegebene Bedingungen, die bei der ungestörten Ausführung des Normalbetriebsprogramms nicht auftreten sollen und deren Auftreten auf einen Fehler hinweisen kann, so führt er selbsttätig eine Rücksetzung aus. Ausnahmebedingungen können zum Beispiel sein: Ein Zugriff eines Teiles des Betriebsprogramms auf nicht für den Zugriff durch diesen Teil freigegebene Speicherstellen, unerwartetes Verhalten von Peripheriebausteinen, etc. Eine solche Rücksetzung beinhaltet die Ausgabe eines Rücksetzimpulses am Ausgang R und das Abbrechen des Normalbetriebsprogramms, um das Betriebsvorbereitungsprogramm im Abschnitt 6 des Programmspeichers 4 zu wiederholen. Die Ausgabe des Rücksetzsignals führt zur Inkrementierung des Zählers 17 und das Ausbleiben der Totmannimpulse zur Herstellung des abgesicherten Zustandes durch die Watchdog-Schaltung 8. Da die Zählzeit des Zählers 12 länger ist als die zur Ausführung des Betriebsvorbereitungsprogramms erforderliche Zeit, kommt es jedoch nicht zur Verriegelung des abgesicherten Zustandes durch die Watchdog-Schaltung 8.

Wenn nach dem Rücksetzen die Ausnahmebedingung erneut auftritt oder eine andere Ausnahmebedingung auftritt, so kommt es jedes Mal zu einer neuen Rücksetzung, bis schließlich der Zähler 17 den Wert des Registers 19 erreicht und die Überwachungseinrichtung 20 den abgesicherten Zustand verriegelt.

## Patentansprüche

1. Mikrocontrollersystem mit einem Mikrocontroller (1), der eingerichtet ist, bei jedem Start sowie unter vorgegebenen Ausnahmebedingungen während des Betriebes ein Betriebsvorbereitungsprogramm (5, 6) auszuführen und nach Ausführung des Betriebsvorbereitungsprogramms (5, 6) zu einem Normalbetriebsprogramm (7) überzugehen und unter der Steuerung durch das Normalbetriebsprogramm (7) ein Normalbetriebs-Anzeigesignal auszugeben, einer durch den Mikrocontroller (1) steuerbaren Vorrichtung (3) und einer Überwachungseinrichtung (2) zum Überwachen, ob der Mikrocontroller (1) das Normalbetriebsprogramm (7) ausführt, anhand des Normalbetriebs-Anzeigesignals, zum Überführen der gesteuerten Vorrichtung (3) in einen gesicherten Zustand bei Nichtvorliegen des Normalbetriebs-Anzeigesignals, und zum Verriegeln der gesteuerten Vorrichtung (3) in dem gesicherten Zustand bei Nichtvorliegen des Normalbetriebs-Anzeigesignals über eine vorgegebene Zeitspanne hinweg, **dadurch gekennzeichnet, dass** die Überwachungseinrichtung (2) ein Register (17) aufweist, das jeweils bei Eintritt der Ausnahmebedingungen inkrementiert wird, und dass die Überwachungseinrichtung (2) eingerichtet ist, die gesteuerte Vorrichtung (3) in dem gesicherten Zustand zu verriegeln, wenn der Inhalt des Registers (17) einen vorgegebenen Wert erreicht.

2. Mikrocontrollersystem nach Anspruch 1, **dadurch gekennzeichnet, dass** das unter den vorgegebenen Ausnahmebedingungen durchgeführte Betriebsvorbereitungsprogramm (6) in dem beim Start ausgeführten Betriebsvorbereitungsprogramm (5,6) enthalten ist

3. Mikrocontrollersystem nach Anspruch 1 oder 2, **dadurch gekennzeichnet, dass** der Mikrocontroller (1) eingerichtet ist, den Eintritt der Ausnahmebedingungen zu erkennen und ein Ausnahmebedingungs-Anzeigesignal (R) an die Überwachungseinrichtung (2) zu liefern.

4. Mikrocontrollersystem nach Anspruch 3, **dadurch gekennzeichnet, dass** der Mikrocontroller Lesezugriff auf das Register (17) hat und eingerichtet ist, einen Vergleich der Inhalte des Registers (17) vor und nach Ausgabe eines Ausnahmebedingungs-Anzeigesignals(R) vorzunehmen.

5. Mikrocontrollersystem nach Anspruch 4, **dadurch gekennzeichnet, dass** der Vergleich unter der Kontrolle eines Betriebsvorbereitungsprogramms (5) stattfindet.

6. Mikrocontrollersystem nach einem der vorhergehenden Ansprüche, **dadurch gekennzeichnet, dass** die Überwachungseinrichtung (2) eingerichtet ist, die vorgegebene Zeitspanne, nach der bei Nichtvorliegen des Normalbetriebs-Anzeigesignals der gesicherte Zustand verriegelt wird, bei Vorliegen der Ausnahmebedingungen länger zu wählen als bei Nichtvorliegen der Ausnahmebedingungen.

7. Mikrocontrollersystem nach einem der vorhergehenden Ansprüche, **dadurch gekennzeichnet, dass** das Register (17) bei jedem Start des Systems den gleichen Inhalt hat

8. Mikrocontrollersystem nach einem der vorhergehenden Ansprüche, **dadurch gekennzeichnet, dass** es Teil eines Sicherheitssystems eines Kraftfahrzeugs, insbesondere eines Antiblockiersystems, eines elektrohydraulischen Bremssystems, eines Lagestabilisierungssystems oder eines Schlupfregelsystems ist.

9. Verfahren zum Betreiben eines Mikrocontrollersystems mit einem Mikrocontroller (1), einer durch den Mikrocontroller (1) steuerbaren Vorrichtung (3) und einer Überwachungseinrichtung (2), insbesondere nach einem der vorhergehenden Ansprüche, bei dem
- der Mikrocontroller (1) unter der Kontrolle eines Normalbetriebsprogramms (7) ein Nonmalbetriebs-Anzeigesignal (W) ausgibt,
- die Überwachungseinrichtung (2) bei Nichtvorliegen des Normalbetriebs-Anzeigesignals (W) die Vorrichtung in einen gesicherten Zustand versetzt und bei Nichtvorliegen über einen vorgegebenen Zeitraum hinweg in dem gesicherten Zustand verriegelt,
- bei Eintritt vorgegebener Ausnahmebedingungen der Mikrocontroller (1) zu einem Betriebsvorbereitungsprogramm (6) übergeht und die Überwachungseinrichtung (2) ein Register (17) inkrementiert, und
- wenn der Inhalt des Registers (17) einen vorgegebenen Wert erreicht, die Überwachungseinrichtung (2) die Vorrichtung (3) in dem gesicherten Zustand verriegelt.

## Claims

1. Microcontroller system having a microcontroller (1) which is set up to execute an operation preparation program (5, 6) upon each start and under predefined exception conditions during operation and to change to a normal operation program (7) after the operation preparation program (5, 6) has been executed and to output a normal operation indication signal under the control of the normal operation program (7), an apparatus (3) which can be controlled by the microcontroller (1), and a monitoring device (2) for monitoring whether the microcontroller (1) is executing the normal operation program (7) using the normal operation indication signal, for changing the controlled apparatus (3) to a secure state if the normal operation indication signal is not present and for locking the controlled apparatus (3) in the secure state if the normal operation indication signal is not present over a predefined period of time, **characterized in that** the monitoring device (2) has a register (17) which is respectively incremented when the exception conditions occur, and **in that** the monitoring device (2) is set up to lock the controlled apparatus (3) in the secure state if the contents of the register (17) reach a predefined value.

2. Microcontroller system according to Claim 1, **characterized in that** the operation preparation program (6) which is carried out under the predefined exception conditions is contained in the operation preparation program (5, 6) executed upon starting.

3. Microcontroller system according to Claim 1 or 2, **characterized in that** the microcontroller (1) is set up to recognize when the exception conditions occur and to provide the monitoring device (2) with an exception condition indication signal (R).

4. Microcontroller system according to Claim 3, **characterized in that** the microcontroller has read access to the register (17) and is set up to compare the contents of the register (17) before and after an exception condition indication signal (R) is output.

5. Microcontroller system according to Claim 4, **characterized in that** the comparison takes place under the control of an operation preparation program (5).

6. Microcontroller system according to one of the preceding claims, **characterized in that** the monitoring device (2) is set up to select the predefined period of time, after which the secure state is locked if the normal operation indication signal is not present, to be longer if the exception conditions are present than if the exception conditions are not present.

7. Microcontroller system according to one of the preceding claims, **characterized in that** the register (17) has the same contents each time the system is started.

8. Microcontroller system according to one of the preceding claims, **characterized in that** it is part of a safety system of a motor vehicle, in particular an antilock brake system, an electrohydraulic brake system, a position stabilizing system or a slip control system.

9. Method for operating a microcontroller system having a microcontroller (1), an apparatus (3) which can be controlled by the microcontroller (1) and a monitoring device (2), in particular according to one of the preceding claims, in which
- the microcontroller (1) outputs a normal operation indication signal (W) under the control of a normal operation program (7),
- the monitoring device (2) changes the apparatus to a secure state if the normal operation indication signal (W) is not present and locks it in the secure state if said normal operation indication signal is not present over a predefined period of time,
- the microcontroller (1) changes to an operation preparation program (6) and the monitoring device (2) increments a register (17) when predefined exception conditions occur, and
- if the contents of the register (17) reach a predefined value, the monitoring device (2) locks the apparatus (3) in the secure state.

## Revendications

1. Système de microcontrôleur comportant un microcontrôleur (1) conçu pour qu'à chaque démarrage et aussi sous des conditions exceptionnelles prédéfinies pendant le fonctionnement, il exécute un programme de préparation de fonctionnement (5, 6) et après l'exécution de ce programme de préparation de fonctionnement (5, 6) il passe à un programme de fonctionnement normal (7) et sous la commande du programme de fonctionnement normal (7) il affiche un signal d'affichage de fonctionnement normal, un dispositif (3) commandé par le microcontrôleur (1) et une installation de surveillance (2) pour surveiller si le microcontrôleur (1) exécute le programme de fonctionnement normal (7) à l'aide du signal d'affichage du fonctionnement normal pour transférer le dispositif commandé (3) dans un état protégé en cas d'absence de signal d'affichage de fonctionnement normal et pour verrouiller le dispositif commandé (3) dans un état sécurisé en l'absence de signal d'affichage de fonctionnement normal suivant une période prédéfinie,
**caractérisé en ce que**
l'installation de surveillance (2) comporte un registre (17) qui est incrémenté à chaque entrée des conditions exceptionnelles et **en ce que** l'installation de surveillance (2) est conçue pour verrouiller le dispositif commandé (3) dans un état sécurisé si le contenu du registre (17) atteint une valeur prédéfinie.

2. Système de microcontrôleur selon la revendication 1,
**caractérisé en ce que**
le programme de préparation de fonctionnement (6) exécuté dans des conditions exceptionnelles prédéfinies est contenu dans le programme de préparation de fonctionnement (5, 6) exécuté au démarrage.

3. Système de microcontrôleur selon l'une des revendications 1 ou 2,
**caractérisé en ce que**
le microcontrôleur (1) est conçu pour reconnaître l'arrivée des conditions exceptionnelles et fournir un signal d'affichage de conditions exceptionnelles (R) à l'installation de surveillance (2).

4. Système de microcontrôleur selon la revendication 3,
**caractérisé en ce que**
le microcontrôleur accède en lecture au registre (17) et il est conçu pour comparer les contenus du registre (17) avant et après l'émission d'un signal d'affichage de conditions exceptionnelles (R).

5. Système de microcontrôleur selon la revendication 4,
**caractérisé en ce que**
la comparaison se fait sous le contrôle d'un programme de préparation de fonctionnement (5).

6. Système de microcontrôleur selon l'une quelconque des revendications précédentes,
**caractérisé en ce que**
l'installation de surveillance (2) est conçue pour fixer la période prédéfinie à la fin de laquelle, en l'absence de signal d'affichage de fonctionnement normal, l'état sécurisé est verrouillé dans le cas de conditions exceptionnelles, à une durée plus longue qu'en l'absence de conditions exceptionnelles.

7. Système de microcontrôleur selon l'une quelconque des revendications précédentes,
**caractérisé en ce qu'**
à chaque démarrage du système le registre (17) a le même contenu.

8. Système de microcontrôleur selon l'une quelconque des revendications précédentes,
**caractérisé en ce qu'**
il fait partie d'un système de sécurité de véhicule automobile, notamment d'un système antiblocage, d'un système de frein électro-hydraulique, d'un système de stabilisation de position ou d'un système de régulation anti-patinage.

9. Procédé de gestion d'un système de microcontrôleur comportant un microcontrôleur (1), un dispositif (3) commandé par le microcontrôleur (1) et une installation de surveillance (2), notamment selon l'une des revendications précédentes, procédé selon lequel
- le microcontrôleur (1) émet un signal d'affichage de fonctionnement normal (W) sous le contrôle d'un programme de fonctionnement normal (7),
- l'installation de surveillance (2), en l'absence de signal d'affichage de fonctionnement normal (W) met le dispositif dans un état sécurisé et en cas d'absence pendant une période prédéfinie, elle le verrouille dans l'état protégé,
- à l'arrivée de conditions exceptionnelles prédéfinies, le microcontrôleur (1) passe sur un programme de préparation de fonctionnement (6) et l'installation de surveillance (2) incrémente un registre (17) et
- si le contenu du registre (17) atteint une valeur prédéfinie, l'installation de surveillance (2) verrouille le dispositif (3) dans l'état sécurisé.
